# NEUE EUROPÄISCHE PATENTSCHRIFT

(11) **EP 2 206 970 B2**
(45) Veröffentlichungstag und Bekanntmachung des Hinweises auf die Entscheidung über den Einspruch: **04.12.2019**
(45) Hinweis auf die Patenterteilung: 23.03.2016
(21) Anmeldenummer: 09175817.7
(22) Anmeldetag: 12.11.2009
(51) Int. Cl.: F24D 3/16

(54) **Strahlflächenaufbau**
Beam area structure
Structure de surfaces rayonnantes

(30) Priorität: 13.01.2009 DE 102009004785
(43) Veröffentlichungstag der Anmeldung: 14.07.2010
(73) Patentinhaber: Frenger Systemen BV Heiz- und Kühltechnik GmbH, 64823 Gross-Umstadt (DE)
(72) Erfinder: Menge, Hans-Werner, 64823 Groß-Umstadt (DE); Menge, Klaus, Dr., 64823 Groß-Umstadt (DE)
(74) Vertreter: Leske, Thomas

(56) Entgegenhaltungen:
- EP-A2- 1 947 399
- DD-A1- 132 079
- DE-A1- 1 454 390
- DE-A1- 19 617 718
- FR-A1- 2 085 165
- FR-A1- 2 085 165
- FR-A1- 2 217 655

## Beschreibung

Die Erfindung betrifft einen Strahlflächenaufbau zum Temperieren eines Raumes mit einer Deckenstrahlplatte mit einem oder mehreren von einem Wärmeübertragungsmedium zu durchströmenden Rohren eines Rohrregisters, dem zu temperierenden Raum zugewandten Strahlplatten und Seitenwandelementen, zwischen denen das Rohrregister und die Strahlplatten angeordnet sind.

Ein derartiger Strahlflächenaufbau ist aus der EP 1 947 399 A2 bekannt. Zur Montage wird eine Deckenstrahlplatte mittels Hacken an einer an einer Raumdecke angebrachten Haltevorrichtung eingehängt.

Aus der DE 1 845 130 ist ein Strahlflächenaufbau bekannt, bei dem mittels zweier Schürzen, die an einander gegenüberliegenden Seiten des Strahlflächenaufbaus angeordnet sind, ein seitliches Entweichen der Luft in den über dem Strahlflächenaufbau gelegenen Deckenbereich vermindert werden soll. Auf diese Weise kann der Strahlungswirkungsgrad der Deckenstrahlplatte verbessert werden.

Ein Strahlflächenaufbau mit einem Staurand ist aus der DE 20 2004 013 206 U1 bekannt. Der dort beschriebene Aufbau besitzt äußere seitliche Strahlplatten, die als Abschlussbleche einen Staurand bilden, der in Einbaulage nach unten verläuft und so ein seitliches Vorbeiströmen von unterhalb des Strahlflächenaufbaus erwärmter Luft in den darüber gelegenen Deckenbereich verringert.

Aus der FR 2 085 165 A1 ist ein Strahlflächenaufbau bekannt, welcher abstehende Kanten aufweist, wobei die Kanten die Deckenstrahlplatte seitlich umfassen und ebenfalls ein seitliches Vorbeiströmen von erwärmter Luft vermindern. Dieses Dokument zeigt die Merkmale des Oberbegriffs von Anspruch 1.

Bei bekannten Lösungen erwärmen sich die Seitenwände bzw. die seitlichen Abschlussbleche, wodurch eine Restkonvektion entsteht und warme Luft nicht in den unter dem Aufbau gelegenen zu temperierenden Raum sondern ungenutzt in über dem Strahlflächenaufbau gelegene Bereiche entweichen kann.

Es ist Aufgabe der vorliegenden Erfindung, einen Strahlflächenaufbau der eingangs genannten Art bereitzustellen, der den Anteil der abgegebenen Strahlungswärme erhöht, indem er die an einer Deckenstrahlplatte entstehende Konvektion reduziert und den Energieverlust durch seitliches Entweichen von temperierter Luft aus dem Strahlungsbereich der Deckenstrahlplatte vermindert.

Diese Aufgabe wird dadurch gelöst, dass der Strahlflächenaufbau mit der Deckenstrahlplatte dem zu temperierenden Raum zugewandte Strahlplatten und Seitenwandelemente aufweist, zwischen denen das Rohregister und die Strahlplatten angeordnet sind, dass die Deckenstrahlplatte wenigstens einen in Einbaulage nach unten weisenden Staurand aufweist, dass sich äußere, seitliche der Strahlplatten gegenüber den Strahlplatten, welche nicht die äußeren, seitlichen Strahlplatten sind, derart nach unten erstrecken, dass sie einen Staurand bilden, der in der in Einbaulage unteren Kante des Staurandes endet, und dass die wenigstens eine Schürze derart der Außenseite wenigstens eines Seitenwandelementes zugeordnet ist, dass zwischen dem wenigstens einem Seitenwandelement und der wenigstens einen Schürze ein zusätzlicher Stauraum gebildet wird. Durch diesen Stauraum kann wirkungsvoll vermieden werden, dass erwärmte Luft an der unteren Kante des Seitenwandelementes vorbei in den Deckenbereich des zu beheizenden Raumes oberhalb des Strahlflächenaufbaus strömt, wodurch Heizenergie an die Umgebung des Raumes verloren gehen würde. Ebenso wird die Wärmeenergie, die von den Seitenwandelementen der Deckenstrahlplatte ausgestrahlt wird und bei bekannten Lösungen ungenutzt in den Deckenbereich entweicht, durch den Stauraum aufgefangen. Mit anderen Worten bewirkt der durch die wenigstens eine Schürze gebildete zusätzliche Stauraum, dass die Restkonvektion aufgefangen und an den zu temperierenden Raum abgegeben werden kann. Dies trägt zu einer verbesserten Ausnutzung der Wärmeleistung der Deckenstrahlplatte bei.

Die wenigstens eine Schürze ist vorzugsweise derart schräg verlaufend angeordnet, dass der Stauraum zwischen der Schürze und dem jeweiligen Seitenwandelement einen etwa dreieckigen Querschnitt besitzt. Die wenigstens eine Schürze kann jedoch auch etwa vertikal und von dem jeweiligen Seitenwand-element beabstandet verlaufen, so dass sich ein im Querschnitt etwa rechteckiger Stauraum bildet. Weiter kann die wenigstens eine Schürze an dem Strahlflächenaufbau bzw. dessen Seitenwandelementen angeordnet und befestigt sein oder den Strahlflächenaufbau haubenartig unter Bildung eines Zwischenraumes oberhalb des Strahlflächenaufbaus umgreifen.

Grundsätzlich kann der Strahlflächenaufbau derart ausgebildet sein, dass die Schürze eine Haube bildet bzw. einer Haube zugeordnet ist, die die obere Fläche der Deckenstrahlplatte abdeckt und somit einen zusätzlichen Stauraum auf der dem zu temperierenden Raum abgewandten Seite des Rohrregisters bildet. Auf diese Weise wird das Entweichen von Wärmeanteilen in den Deckenbereich weiter vermindert.

Eine weitere Ausführungsform der Erfindung sieht vor, dass die Haube einstückig ausgebildet ist, wobei die Haube sich kostengünstig durch beispielsweise Blechumformung herstellen lässt. Darüber hinaus liegen dann auch keine Schlitze oder Spalte vor, die eine Konvektion der temperierten Luft in unerwünschte Bereiche verursachen könnten.

Insbesondere mit Hinblick auf bereits installierte gängige Deckenstrahlplatten, ist ein Strahlflächenaufbau mit mindestens zwei separaten Schürzen, die auf einander gegenüberliegenden Seiten der Deckenstrahlplatte angeordnet sind, vorteilhaft. Durch eine derartige Ausführungsform ist es beispielsweise möglich, bereits an der Decke installierte Systeme hinsichtlich ihres Strahlungswirkungsgrades aufzuwerten, indem ein Stauraum zum Auffangen von Restkonvektion durch einfaches Nachrüsten der Schürzen realisiert wird. Die Schürzen lassen sich durch geeignete Befestigungsmittel, beispielsweise einer einfachen Schraubverbindung, an der Deckenstrahlplatte montieren.

In Weiterbildung dieses Erfindungsgedankens können die Schürzen auch derart ausgebildet sein, dass sie die obere Fläche der Deckenstrahlplatte zumindest bereichsweise abdecken und so die Wärmeverluste in den Deckenbereich durch die Bildung eines zusätzlichen Stauraumes oberhalb des Rohrregisters weiter reduzieren.

Grundsätzlich kann die Deckenstrahlplatte einen Abschnitt aufweisen, der zur mittelbaren oder unmittelbaren Anbindung der wenigstens einen Schürze ausgebildet ist, was die Montage erleichtert. Dabei kann die Schürze sowohl an den Seitenwandelementen der Deckenstrahlplatte als auch in einem Bereich angebunden werden, der oberhalb des Rohrregisters liegt. In diesem Zusammenhang ist es auch möglich, die bereits erwähnte bereichsweise Abdeckung der oberen Fläche der Deckenstrahlplatte zu realisieren.

Insbesondere mit Hinblick auf einen Wärmeverlust in Folge von Konvektion hat es sich als vorteilhaft herausgestellt, wenn zwischen dem zur Anbindung an die Schürze ausgebildeten Abschnitt der Deckenstrahlplatte und der Schürze ein wärmeisolierendes Element, vorzugsweise eine Wärmedämmung oder ein Distanzstück, vorgesehen ist. Dies verhindert den direkten Wärmeübergang von den Seitenwandelementen in die wenigstens eine Schürze und trägt so zur Verbesserung des Strahlungswirkungsgrades der Deckenstrahlplatte bei. Wenn die Deckenstrahlplatte selbst ebenfalls über wärmeisolierende Elemente an der Decke montiert wird, kann die Deckenstrahlplatte von Elementen entkoppelt werden, die eine nicht gewollte Wärmekonvektion, beispielsweise in die Decke, bewirken können.

Erfindungsgemäß wird ein besonders hoher Strahlungswirkungsgrad mit einem Strahlflächenaufbau dadurch erreicht, dass die Deckenstrahlplatte derart ausgeformt ist, dass sie wenigstens einen in Einbaulage nach unten weisenden Staurand aufweist, der ein Entweichen von temperierter Luft an der Seite des Strahlflächenaufbaus in den Deckenbereich reduziert. Der nach unten weisende Staurand und/oder das jeweilige Seitenelement werden durch separate Strahlplatten gebildet. Es ist aber auch möglich, dass der Staurand und/oder das Seitenelement durch ein einstückiges separates Element gebildet werden, das eine den Staurand und das Seitenelement bildende Umkantung aufweist. Eine solche Ausgestaltung faller jedoch nicht unter den Schutzbereich der Ansprüche.

Als besonders vorteilhaft für eine Wirkungsgradverbesserung der Deckenstrahlplatte erweist sich eine Schürze, deren in Einbaulage nach unten liegende tiefste Punkt unterhalb des in Einbaulage nach unten liegenden tiefsten Punktes der Deckenstrahlplatte, d.h. bspw. unterhalb eines Staurandes, liegt. Auf diese Weise wird aus dem Deckenstrahlplattenbereich entweichende temperierte Luft effektiv in dem durch die Schürze und das Seitenwandelement gebildeten Stauraum aufgefangen. Es ist aber auch möglich, dass der in Einbaulage nach unten liegende tiefste Punkt der Schürze oberhalb des in Einbaulage nach unten liegenden tiefsten Punktes der Deckenstrahlplatte liegt.

Die Deckenstrahlplatte und die Schürze können in geeigneter Weise, bspw. mittels Steck-, Schraub-, Klemm-, Löt- oder Schweißverbindungen miteinander verbunden werden.

Wenn auf der dem zu temperierenden Raum abgewandten Seite des Rohrregisters eine Dämmschicht angeordnet ist, kann der Wärmeverlust der Deckenstrahlplatte weiter reduziert werden. Dabei kann die Schürze dazu genutzt werden, die Wärmedämmung oberhalb des Rohrregisters in der Deckenstrahlplatte zu befestigen, wenn beispielsweise die Wärmedämmung von einem in Einbaulage zumindest bereichsweise horizontal erstreckenden Abschnitt der Schürze umgriffen wird. Auf diese Weise ist eine besonders effektive Dämmung der Deckenstrahlplatte gegenüber Wärmeverlusten realisierbar.

Weiterbildungen, Vorteile und Anwendungsmöglichkeiten der Erfindung ergeben sich auch aus der nachfolgenden Beschreibung von Ausführungsbeispielen und der Zeichnung.

Es zeigen schematisch:
- Fig. 1: eine Schnittdarstellung des erfindungsgemäßen Strahlflächenaufbaus nach einer ersten Ausführungsform,
- Fig. 2: eine Schnittdarstellung des erfindungsgemäßen Strahlflächenaufbaus nach einer zweiten Ausführungsform mit separaten Schürzen, und
- Fig. 3: eine Schnittdarstellung des erfindungsgemäßen Strahlflächenaufbaus nach einer dritten Ausführungsform mit separaten Schürzen und Isolierungselementen.

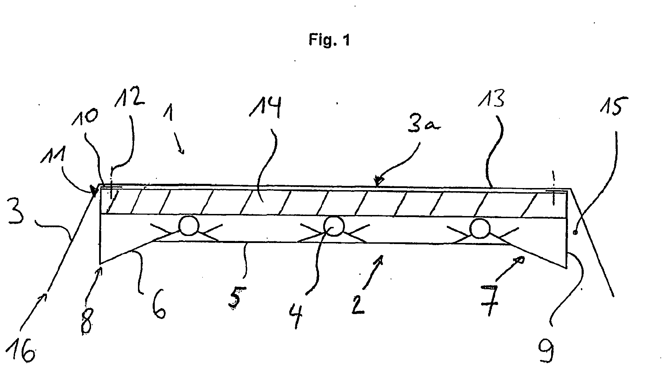

Fig. 1 zeigt einen Strahlflächenaufbau 1 mit einer Deckenstrahlplatte 2 und zwei Schürzen 3, die einer Haube 3a zugeordnet sind und den oberen Bereich der Deckenstrahlplatte 2 abdecken. Die Deckenstrahlplatte 2 weist mehrere Rohre 4 auf, die im Wesentlichen in einer Ebene liegend zu einem Rohrregister zusammen gefasst sind. Auf der dem zu temperierenden Raum zugewandten Seite der Rohre 4 sind Strahlplatten 5, 6 aus Blech angeordnet, die die Wärme an die Umgebung abstrahlen. Die äußeren seitlichen Strahlplatten 6 der Anordnung der Strahlplatten 5, 6 erstrecken sich gegenüber der Strahlplatte 5 derart nach unten, dass sie einen Staurand 7 bilden, der in der in Einbaulage unteren Kante 8 des Staurandes 7 endet.

Anschließend an die untere Kante 8 des Staurandes 7 sind an den Seiten der Deckenstrahlplatte 2 Seitenwandelemente 9 vorgesehen, die sich im Wesentlichen vertikal nach oben erstrecken. Auf der den Strahlplatten abgewandten Seite bilden die Seitenwandelemente 9 durch eine Umkantung 11 einen horizontal verlaufenden Abschnitt. Auf diesem sind die die Haube 3a bildenden Schürzen 3 mittels einer durch horizontale Strichlinien angedeuteten Verbindung 12 befestigt. Die Verbindung kann aus einer Schraubverbindung bestehen, es sind aber auch Klemm-, Löt- oder Schweißverbindungen möglich.

Die Haube 3a deckt die in Einbaulage obere Fläche der Deckenstrahlplatte 2 mit einem in der Fig. 1 gezeigten horizontalen Abschnitt 13 der Schürzen 3 ab. Zwischen der Haube 3a und dem durch die Rohre 4 gebildeten Rohrregister ist eine Wärmedämmung in Form einer Dämmschicht 14 angeordnet. Die Dämmschicht 14 kann durch den horizontal verlaufenden Abschnitt 10 der Seitenelemente 9 auf oder über dem durch die Rohre 4 gebildeten Rohrregister gehalten werden. Ebenfalls kann, in der Fig. 1 nicht angedeutet, die Dämmschicht 14 auch durch den horizontalen Abschnitt 13 der Schürzen 3 auf oder über dem durch die Rohre 4 gebildeten Rohrregister befestigt sein.

Die Schürzen 3 sind in der dargestellten Ausführungsform in Einbaulage nach unten geneigt, wobei sie sich in Richtung des zu temperierenden Raumes von den Seitenwandelementen 9 konkav entfernen. Dadurch wird zwischen den Schürzen 3 und den Seitenwandelementen 9 ein Stauraum 15 gebildet, der, wie in Fig. 1 gezeigt, einen im Wesentlichen dreieckigen Querschnitt besitzt und dessen tiefster Punkt 16 in Richtung des zu temperierenden Raumes tiefer gelegen ist als die untere Kante 8 des Staurandes 7. In diesem Stauraum 15 wird die durch die Seitenwandelemente 9 entweichende Wärme und die über den Staurand 7 und die untere Kante 8 entweichende temperierte Luft aufgefangen und kann nicht in den Deckenbereich entweichen.

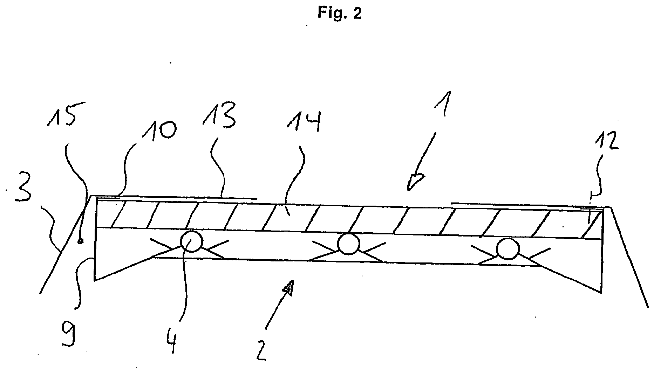

Die in Fig. 2 dargestellte Ausführungsform des Strahlflächenaufbaus 1 weist ebenfalls zwei separate Schürzen 3 auf einander gegenüberliegenden Seiten der Deckenstrahlplatte 2 auf. Wie in Fig. 1 wird ein Stauraum 15 zwischen den Seitenwandelementen 9 der Deckenstrahlplatte 2 und den nach unten verlaufenden und sich dabei von den Seitenwandelementen 9 entfernenden Schürzen 3 gebildet. Die Schürzen 3 besitzen ebenfalls einen oberhalb der Deckenstrahlplatte 2 angeordneten horizontalen Abschnitt 13, der mit dem horizontal verlaufenden Abschnitt 10 des jeweiligen Seitenwandelementes 9 über die durch Strichlinien angedeutete Verbindung 12 verbunden ist. Die Schürzen 3 sind derart ausgebildet, dass ihr horizontaler Abschnitt 13 die obere Fläche der Deckenstrahlplatte 2 nur teilweise abdeckt. Ebenso wie in Fig. 1, ist zwischen dem horizontal verlaufenden Abschnitt 10 der Seitenwandelemente 9 und dem durch die Rohre 4 gebildeten Rohrregister eine Dämmschicht 14 vorgesehen, die die Wärmekonvektion in den Deckenbereich reduziert.

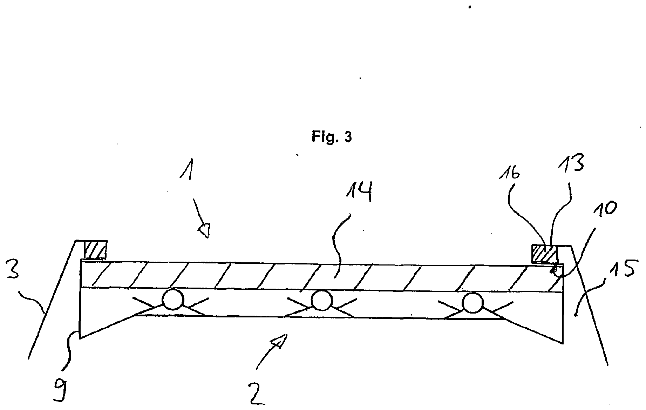

Anders als in Fig. 2, weist die in Fig. 3 dargestellte Ausführungsform des Strahlflächenaufbaus 1 horizontale Abschnitte 13 der Schürzen 3 auf, die sich in horizontaler Richtung nicht über die horizontal verlaufenden Abschnitte 10 der Seitenwandelemente 9 erstrecken, was grundsätzlich Material einspart. Die Schürzen 3 sind nicht unmittelbar über die horizontalen Abschnitte 13 mit den horizontalen verlaufenden Abschnitten 10 der Seitenwandelemente 9 verbunden. Stattdessen sind in dieser Ausführungsform zwischen den Schürzen 3 und den horizontal verlaufenden Abschnitten 10 der Seitenwandelemente 9 wärmeisolierende Elemente 17 vorgesehen, die einen direkten Wärmeübergang von den Seitenwandelementen 9 in die Schürzen 3 verhindern.

Die Befestigung des Strahlflächenaufbaus 1 an einer Decke oder dergleichen kann in geeigneter Weise über in den Figuren nicht dargestellte Querträger und/oder Aufhängungen erfolgen. Die wärmeisolierenden Elemente können dabei sowohl bei Ausführungsformen bei denen die Schürzen einer Haube zugeordnet sind, verwendet werden, als auch bei Ausführungsformen, bei denen die Schürzen direkt an den Seitenwandelementen befestigt sind. Weiter können die Schürzen bzw. die Haube auch beabstandet von den Seitenwandelementen 9 bzw. deren horizontalen Abschnitten 13 über dem Strahlflächenaufbau vorgesehen sein, so dass bspw. eine den gesamten Strahlflächenaufbau 1 umgreifende Haube 3a gebildet wird.

### Bezugszeichenliste

- 1: Strahlflächenaufbau
- 2: Deckenstrahlplatte
- 3: Schürze
- 3a: Haube
- 4: Rohre
- 5: Strahlplatte
- 6: äußere seitliche Strahlplatten
- 7: Staurand
- 8: untere Kante
- 9: Seitenwandelement
- 10: horizontal verlaufender Abschnitt des Seitenwandelementes
- 11: Umkantung
- 12: Verbindung
- 13: horizontaler Abschnitt der Schürze
- 14: Wärmedämmung
- 15: Stauraum
- 16: tiefster Punkt der Schürze
- 17: wärmeisolierendes Element

## Patentansprüche

1. Strahlflächenaufbau zum Temperieren eines Raumes mit einer Deckenstrahlplatte (2) mit einem oder mehreren von einem Wärmeübertragungsmedium, wie Wasser, zu durchströmenden Rohren (4) eines Rohrregisters, wobei der Strahlflächenaufbau zusätzlich wenigstens eine in Einbaulage zumindest bereichsweise nach unten weisende Schürze (3) aufweist; wobei die Deckenstrahlplatte (2) in Einbaulage dem zu temperierenden Raum zugewandten Strahlplatten (5, 6) und Seitenwandelemente (9) aufweist, zwischen denen das Rohrregister und die Strahlplatten (5, 6) angeordnet sind,
und die Deckenstrahlplatte (2) wenigstens einen in Einbaulage nach unten weisenden Staurand (7) aufweist,
und
die wenigstens eine Schürze (3) derart der Außenseite wenigstens eines Seitenwandelementes (9) zugeordnet ist, dass zwischen dem wenigstens einem Seitenwandelement (9) und der wenigstens einen Schürze (3) ein zusätzlicher Stauraum (15) gebildet wird, **dadurch gekennzeichnet, dass** sich äußere, seitliche der Strahlplatten (6) gegenüber den Strahlplatten (5), welche nicht die äusseren, seitlichen Strahlplatten (6) sind, derart nach unten erstrecken, dass sie einen Staurand (7) bilden, der in der in Einbaulage unteren Kante (8) des Staurandes (7) endet.

2. Strahlflächenaufbau nach Anspruch 1, **dadurch gekennzeichnet, dass** die wenigstens eine Schürze (3) einer Haube (3a) zugeordnet ist, die die obere Fläche der Deckenstrahlplatte (2) abdeckt.

3. Strahlflächenaufbau nach Anspruch 2, **dadurch gekennzeichnet, dass** die Haube (3a) einstückig ausgebildet ist.

4. Strahlflächenaufbau nach einem der Ansprüche 1 oder 2, **dadurch gekennzeichnet, dass** mindestens zwei separate Schürzen (3) auf einander gegenüberliegenden Seiten der Deckenstrahlplatte (2) vorgesehen sind.

5. Strahlflächenaufbau nach Anspruch 4, **dadurch gekennzeichnet, dass** die Schürzen (3) die obere Fläche der Deckenstrahlplatte (2) zumindest bereichsweise abdecken.

6. Strahlflächenaufbau nach einem der vorherigen Ansprüche, **dadurch gekennzeichnet, dass** die Deckenstrahlplatte (2) einen Abschnitt aufweist, der zur mittelbaren oder unmittelbaren Anbindung der wenigstens einen Schürze (3) ausgebildet ist.

7. Strahlflächenaufbau nach Anspruch 6, **dadurch gekennzeichnet, dass** zwischen dem zur Anbindung an die Schürze ausgebildeten Abschnitt der Deckenstrahlplatte (2) und der Schürze (3) ein wärmeisolierendes Element (16), vorzugsweise eine Wärmedämmung, oder ein Distanzstück vorgesehen ist.

8. Strahlflächenaufbau nach einem der vorherigen Ansprüche, **dadurch gekennzeichnet, dass** der in Einbaulage nach unten liegende tiefste Punkt (16) der wenigstens einen Schürze (3) unterhalb des in Einbaulage nach unten liegenden tiefsten Punktes (8) der Deckenstrahlplatte (2) liegt.

9. Strahlflächenaufbau nach einem der vorherigen Ansprüche, **dadurch gekennzeichnet, dass** die Deckenstrahlplatte (2) und die Schürze (3) mittels einer Steck-, Schraub-, Klemm-, Löt- oder Schweißverbindung (12) miteinander verbunden sind.

10. Strahlflächenaufbau nach einem der vorherigen Ansprüche, **dadurch gekennzeichnet, dass** auf der dem zu temperierenden Raum abgewandten Seite des Rohrregisters eine Dämmschicht (14) angeordnet ist.

## Claims

1. Radiating surface structure for controlling the temperature of a room, comprising a ceiling radiating panel (2) with one or more pipes (4) of a pipe register through which a heat transfer medium, such as water, is to flow, the radiating surface structure additionally having at least one apron (3), which in the installed position points downwards at least in certain regions, wherein the ceiling radiating panel (2) in the installed position has radiating panels (5, 6) facing the room of which the temperature is to be controlled and side-wall elements (9), between which the pipe register and the radiating panels (5, 6) are arranged,
and the ceiling radiating panel (2) has at least one baffle (7), which in the installed position points downwards,
and
the at least one apron (3) is assigned to the outer side of at least one side-wall element (9) in such a way that an additional baffle space (15) is formed between the at least one side-wall element (9) and the at least one apron (3), **characterized in that** outer, lateral panels of the radiating panels (6) extend with respect to the radiating panels (5), which are not the outer, lateral radiating panels (6), downwards in such a way that they form a baffle (7), which ends in the edge (8) of the baffle (7) that is the lower edge in the installed position.

2. Radiating area structure according to Claim 1, **characterized in that** the at least one apron (3) is assigned a shroud (3a), which covers the upper area of the ceiling radiating panel (2).

3. Radiating area structure according to Claim 2, **characterized in that** the shroud (3a) is formed in one piece.

4. Radiating area structure according to either of Claims 1 and 2, **characterized in that** at least two separate aprons (3) are provided on opposite sides of the ceiling radiating panel (2).

5. Radiating area structure according to Claim 4, **characterized in that** the aprons (3) cover the upper area of the ceiling radiating panel (2) at least in certain regions.

6. Radiating area structure according to one of the preceding claims, **characterized in that** the ceiling radiating panel (2) has a portion which is designed for the indirect or direct connection of the at least one apron (3).

7. Radiating area structure according to Claim 6, **characterized in that** a heat-insulating element (16), preferably a thermal insulation, or a spacer is provided between the portion of the ceiling radiating panel (2) that is designed for the connection to the apron and the apron (3).

8. Radiating area structure according to one of the preceding claims, **characterized in that** the lowest point (16) of the at least one apron (3) lying downwards in the installed position lies under the lowest point (8) of the ceiling radiating panel (2) lying downwards in the installed position.

9. Radiating area structure according to one of the preceding claims, **characterized in that** the ceiling radiating panel (2) and the apron (3) are connected to one another by means of an inserted, screwed, clamped, soldered or welded connection (12).

10. Radiating area structure according to one of the preceding claims, **characterized in that** an insulating layer (14) is arranged on the side of the pipe register that is facing away from the room of which the temperature is to be controlled.

## Revendications

1. Structure de surface rayonnante pour la régulation en température d'une pièce, comprenant une plaque rayonnante de plafond (2) avec un ou plusieurs tubes (4) devant être parcourus par un milieu d'échange thermique, tel que de l'eau, d'un registre de tubes, la structure de surface rayonnante présentant en outre au moins un tablier (3) au moins en partie tourné vers le bas dans la position d'installation la plaque rayonnante de plafond (2), dans la position d'installation, présentant des plaques rayonnantes (5, 6) et des éléments de paroi latéraux (9) tournés vers la pièce à réguler en température, entre lesquels sont disposés le registre de tubes et les plaques rayonnantes (5, 6), et la plaque rayonnante de plafond (2) présentant au moins un bord de retenue (7) tourné vers le bas dans la position d'installation, et l'au moins un tablier (3) étant associé au côté extérieur d'au moins un élément de paroi latérale (9) de telle sorte qu'entre l'au moins un élément de paroi latérale (9) et l'au moins un tablier (3) soit formé un espace de retenue supplémentaire (15), **caractérisée en ce que** des plaques latérales extérieures des plaques rayonnantes (6) s'étendent vers le bas par rapport aux plaques rayonnantes (5) qui ne sont pas les plaques rayonnantes latérales extérieures (6) de telle sorte qu'elles forment un bord de retenue (7) qui se termine dans l'arête (8), inférieure dans la position d'installation, du bord de retenue (7).

2. Structure de surface rayonnante selon la revendication 1, **caractérisée en ce que** l'au moins un tablier (3) est associé à un capot (3a) qui recouvre la surface supérieure de la plaque rayonnante de plafond (2).

3. Structure de surface rayonnante selon la revendication 2, **caractérisée en ce que** le capot (3a) est réalisé d'une seule pièce.

4. Structure de surface rayonnante selon l'une quelconque des revendications 1 et 2, **caractérisée en ce qu'**au moins deux tabliers séparés (3) sont prévus sur des côtés mutuellement opposés de la plaque rayonnante de plafond (2).

5. Structure de surface rayonnante selon la revendication 4, **caractérisée en ce que** les tabliers (3) recouvrent au moins en partie la surface supérieure de la plaque rayonnante de plafond (2).

6. Structure de surface rayonnante selon l'une quelconque des revendications précédentes, **caractérisée en ce que** la plaque rayonnante de plafond (2) présente une portion qui est réalisée pour le rattachement de manière directe ou indirecte à l'au moins un tablier (3).

7. Structure de surface rayonnante selon la revendication 6, **caractérisée en ce qu'**entre la portion de la plaque rayonnante de plafond (2) réalisée pour le rattachement au tablier et le tablier (3) est prévu un élément calorifuge (16), de préférence une isolation thermique, ou un élément d'espacement.

8. Structure de surface rayonnante selon l'une quelconque des revendications précédentes, **caractérisée en ce que** le point (16) situé le plus profondément vers le bas dans la position d'installation, de l'au moins un tablier (3), est situé en dessous du point (8) situé le plus profondément vers le bas, dans la position d'installation, de la plaque rayonnante de plafond (2).

9. Structure de surface rayonnante selon l'une quelconque des revendications précédentes, **caractérisée en ce que** la plaque rayonnante de plafond (2) et le tablier (3) sont connectés l'un à l'autre au moyen d'une connexion par enfichage, par vissage, par serrage, par brasage ou par soudage (12).

10. Structure de surface rayonnante selon l'une quelconque des revendications précédentes, **caractérisée en ce qu'**une couche isolante (14) est disposée du côté du registre de tubes opposé à la pièce à réguler en température.
